Europäisches Patentamt

(19) European Patent Office

Office européen des brevets

(11) Publication number: **0 440 476 A2**

# (12) EUROPEAN PATENT APPLICATION

(21) Application number: 91300770.4

(22) Date of filing: 31.01.91

(51) Int. Cl.⁵: **B29C 33/64,** C08L 83/08,
// B29K83:00

(30) Priority: 01.02.90 JP 23832/90

(43) Date of publication of application:
07.08.91 Bulletin 91/32

(84) Designated Contracting States:
DE FR GB

(71) Applicant: Shin-Etsu Chemical Co., Ltd.
6-1, Otemachi 2-chome
Chiyoda-ku Tokyo 100 (JP)

(72) Inventor: Kuwata, Satoshi
117-104 Yanase
Annaka-shi, Gunma-ken (JP)
Inventor: Hirai, Motohiko
1610 Nishikamiisobe
Annaka-shi, Gunma-ken (JP)

(74) Representative: Moore, Anthony John et al
Gee & Co. Chancery House Chancery Lane
London WC2A 1QU (GB)

(54) Mold-releasing and lubricating silicone oils.

(57) A mold-releasing and lubricating silicone oil has the following general formula:
$$R^1_a R^2_b SiO_{(4-a-b)/2} \quad (I)$$
wherein $R^1$ represents $X-R^3-$; $R^3$ is $C_{1-8}$ and $X$ is $NH_2$ or $NHR^4NH_2$, $R^4$ being $C_{1-8}$ alkylene; $R^2$ is a monovalent $C_{1-6}$ hydrocarbon group; and "a" and "b" satisfy the relations $0.001 \leq a \leq 0.01$ and $1.95 \leq a + b \leq 2.20$. The oil has a viscosity of 10 to 100,000 cs at 25°C, an amine equivalent of 10,000 to 100,000, excellent thermal resistance, and high affinity for the surfaces of metal or metal oxide molds.

EP 0 440 476 A2

Jouve, 18, rue Saint-Denis, 75001 PARIS

# MOLD-RELEASING AND LUBRICATING SILICONE OILS

This invention relates to silicone oils which have not only excellent thermal resistance but also excellent affinity for the surfaces of metal molds or metal oxide-containing molds.

Organopolysiloxane oils of the dimethylpolysiloxane type have so far been used in various ways, eg as mold-releasing agents and lubricants. In these uses, various characteristics of organopolysiloxane fluids, including high thermal resistance, excellent cold resistance, small change in viscosity with temperature and low surface tension, are exploited fully (as described, for example, in Lectures on Plastic Materials, Volume 9 (entitled "Silicone Resins"), page 49, Nikkan Kogyo Shinbunsya). In recent years, however, organopolysiloxane fluids have been required to have affinity for metal or metal oxide surfaces as well as retaining the various above-described thermal characteristics.

On the other hand, organopolysiloxanes containing amino groups have long been known as having an affinity for metal or metal oxide surfaces ; and they have been widely used as agents for imparting water-repellent durability to car waxes (see, for example, US Patents Nos 3,549,590 and 3,558,556, and Japanese Patent Kokoku No 64-12313).

However, the typical amino group-containing organopolysiloxanes described in the above-cited specifications are sunject to thermal oxidation because they are generally inferior to dimethylorganopolysiloxanes in thermal resistance under severe temperature conditions. As a result of the degradation arising from the thermal oxidation, their viscosity tends to increase, even resulting in gelling in the worse cases. Accordingly, the amino group-containing organopolysiloxanes have been used at relatively low temperatures for limited purposes, eg, for car wax and fiber surface treatment.

An object of this invention is to provide a silicone fluid composition not only with excellent affinity for the surfaces of metal and/or metal oxide molds, but also excellent thermal resistance, mold-releasing facility and lubricity.

As a result of examinining various silicone fluids, it has now been found that organopolysiloxanes can acquire extremely high thermal resistance only when they contain amino groups in particular proportions.

According to the present invention there is provided a mold-releasing and lubricating silicone oil which has a viscosity of from 10 to 100,000 cs at 25°C, an amine equivalent (defined as the gram number of an amino group-containing compound neutralizable with one equivalent of hydrochloric acid) in the range of 10,000 to 100,000, and is represented by the following general formula (I) :

$$R^1_a R^2_b siO(4-a-b)/2 \quad (I)$$

wherein $R^1$ represents $X\text{-}R^3\text{-}$ ; $R^3$ represents an alkylene group containing 1 to 8 carbon atoms ; X represents $NH_2$ or $NHR^4NH_2$ ; $R^4$ represents a monovalent hydrocarbon group , containing 1 - 6 carbon atoms ; and "a" and "b" satisfy the relations $0.0001 \leqq a \leqq 0.01$ (preferably $0.005 \leqq a \leqq 0.005$) and $1.95 \leqq a+b \leqq 2.20$.

Because of its excellence not only in thermal resistance but also in affinity for metal and metal oxide surfaces, the organopolysiloxane fluid containing an amino group in particular proportions is suitable for use as a metal mold release agent, lubricating oil and the like in plastics processing applications for which thermal resistance is required.

When "a" in the general formula (I) is smaller that 0.0001, the fluid composition of the present invention becomes poor in affinity for the surfaces of metals and/or metal oxides resulting in a drop in mold-releasing facility and lubricity, whereas when it is larger that 0.01 the thermal resistance thereof is lowered.

Suitable examples of a monovalent hydrocarbon group represented by $R^2$ include alkyl groups such as methyl, ethyl, propyl, butyl, pentyl and hexyl groups ; and cycloalkyl groups such as cyclopentyl and cyclohexyl groups ; halogenated alkyl groups such as trifluoropropyl group and nonafluorohexyl groups ; and phenyl groups. The groups represented by $R^2$ may be the same or different. However, it is preferred in particular that every $R^2$ is methyl group.

The amino group-containing organopolysiloxane represented by the general formula (I) has a viscosity of 10 cs - 100,000 cs at 25°C. In particular, it is desirable that the viscosity thereof should range from 100 to 10,000 cs at 25°C. When the viscosity is lower than 10 cs, the resulting organopolysiloxane contains a volatile component in a large proportion, so it cannot continue to show its excellent abilities for a long time when used under high temperatures. On the other hand, when the viscosity is higher than 100,000 cs a difficulty arises in handling since dilution with a solvent becomes necessary upon coating.

As described above, mold-releasing and lubricating oil excellent in thermal resistance can be obtained by using the amino group-containing organopolysiloxane of this invention wherein an amino group is contained in an extremely limited quantity.

In another embodiment of this invention, mold-releasing and lubricating oil excellent in thermal resistance is prepared by mixing an amino group-containing organopolysiloxane with an organopolysiloxane which is represented by the general formula (II) and has a viscosity of 10 - 100,00 cs at 25°C ;

$$R^2{}_c SiO_{(4-c)/2} \quad (II)$$

wherein $R^2$ has the same meaning as $R^2$ in the general formula (I) and $1.95 \leqq c \leqq 2.20$.

## EXAMPLES

The present invention will now be illustrated in greater detail by reference to the following Examples. However, the invention should not be construed as being limited to these Examples. Additionally, in the following Examples, all viscosities are values measured at 25°C.

## EXAMPLES 1 TO 4 AND COMPARATIVE EXAMPLE 1

Twenty-five gram portions of amino group-containing organopolysiloxanes (A) to (E), shown in Table 1, were weighed out in separate clean hard-glass beakers with a volume of 100 ml (inner diameter : 51 mm, depth 73 mm), and allowed to stand in a hot-air circulation type thermostat regulated at 200°C. Then, the thus heated samples were examined for change in viscosity, and the results obtained are shown in Table 2.

## COMPARATIVE EXAMPLE 2

Changes in viscosity were examined in the same manner as in the above-described Examples, except that dimethylpolysiloxane (with a viscosity of 335 cs) was used in place of the amino group-containing organopolysiloxanes. The results obtained are also shown in Table 2.

## Table-1 Amino group-containing organopolysiloxanes

| Sample | Chemical Formula | Amine Equivalent |
|---|---|---|
| (A) | $(CH_3)_{2.01}[(CH_2)_3NHCH_2CH_2NH_2]_{0.001}SiO_{0.9945}$ | 37,000 |
| (B) | $(CH_3)_{2.00}[(CH_2)_3NHCH_2CH_2NH_2]_{0.0007}SiO_{0.99965}$ | 55,000 |
| (C) | $(CH_3)_{2.00}[(CH_2)_3NH_2]_{0.0034}SiO_{0.9983}$ | 22,000 |
| (D) | $(CH_3)_{2.00}[(CH_2)_3NH_2]_{0.0012}SiO_{0.9994}$ | 60,000 |
| (E) | $(CH_3)_{2.00}[(CH_2)_3NHCH_2CH_2NH_2]_{0.0049}SiO_{0.99755}$ | 7,500 |

EP 0 440 476 A2

EP 0 440 476 A2

Table-2

Viscosity and Change rate ( parenthesized )

| Example | Organopoly-siloxane | Before Heating | After 7 days' Heating | After 13 days' Heating |
|---|---|---|---|---|
| 1 | (A) | 320 cs | 410 cs (+28%) | 458 cs (+43%) |
| 2 | (B) | 1,120 cs | 1,320 cs (+18%) | 1,400 cs (+25,%) |
| 3 | (C) | 585 cs | 824 cs (+41%) | 998 cs (+71%) |
| 4 | (D) | 10,500 cs | 12,700 cs (+21%) | 14,200 cs (+35%) |
| C-1 * | (E) | 260 cs | 6,800 cs (+2,500 %) | gelling |
| C-2 ** | Dimethyl-polysiloxane | 335 cs | 600 cs ( +79%) | 2,000 cs (+497 %) |

* : Comparative Example 1 , ** : Comparative Example 2

It has been proved from the data in Table 2 that the organopolysiloxanes according to the present invention which contained an amino group in the defined proportions are superior in thermal resistance not only to other amino group-containing organopolysiloxanes, in which the proportion of the amino groups was outside the range of the present invention, but also to amino group-free dimethylpolysiloxanes. Moreover, the organopolysiloxanes of the present invention are endowed with excellent properties as mold-releasing agents and lubricating oils to be used at relatively high temperatures.

## Claims

1. A mold-releasing and lubricating silicone oil comprising an organopolysiloxane, characterised in that the oil comprises an aminoorganopolysiloxane which has a viscosity of 10 to 100,000 cs at 25°C, an amine equivalent of 10,000 to 100,000, and is represented by the following general formula (I) :

$$R^1{}_a R^2{}_b SiO_{(4-a-b)/2} \quad (I)$$

wherein $R^1$ represents $X-R^3-$, wherein $R^3$ represents an alkylene group containing 1 to 8 carbon atoms and X represents $NH_2$ or $NHR^4NH_2$, wherein $R^4$ represents an alkylene group containing 1 to 8 carbon atoms; $R^2$ represents a monovalent hydrocarbon group containing 1 to 6 carbon atoms ; and "a" and "b" satisfy the relations $0.0001 \leqq a \leqq 0.01$ and $1.95 \leqq a + b \leqq 2.20$.

2. A silicone oil as claimed in claim 1, wherein "a" satisfies the relation $0.0005 \leqq a \leqq 0.005$.

3. A silicone oil as claimed in claim 1 or 2, wherein $R^2$ is selected from alkyl groups, cycloalkyl groups, halogenated alkyl groups and phenyl groups.

4. A silicone oil as claimed in claim 3, wherein the alkyl groups are methyl, ethyl, propyl, butyl, pentyl and hexyl groups, the cycloalkyl groups are cyclopentyl and cyclohexyl groups, and the halogenated alkyl groups are trifluoropropyl and nonafluorohexyl groups.

5. A silicone oil as claimed in claim 4, wherein $R^2$ is a methyl group.

6. A silicone oil as claimed in any preceding claim, wherein the aminoorganopolysiloxane represented by the general formula (I) has a viscosity of 100 to 10,000 cs at 25°C.

7. A mold-releasing and lubricating silicone oil comprising a mixture of aminoorganopolysiloxane and an organopolysiloxane which is represented by the general formula (II) :

$$R^2{}_c SiO_{(4-c)/2} \quad (II)$$

wherein $R^2$ represents a monovalent hydrocarbon group containing 1 to 6 carbon atoms, and "c" satisfies the relation $1.95 \leqq c \leqq 2.20$, and has a viscosity of 10 to 100,000 cs at 25°C, the mixture having a viscosity of 10 to 100,000 cs at 25°C and an amine equivalent of 10,000 to 100,000.